# EUROPÄISCHE PATENTSCHRIFT

(11) **EP 2 011 302 B1**
(45) Veröffentlichungstag und Bekanntmachung des Hinweises auf die Patenterteilung: **02.05.2012**
(21) Anmeldenummer: 07704444.4
(22) Anmeldetag: 08.02.2007
(51) Int. Cl.: H04W 12/04, H04L 29/06

(54) **VERFAHREN UND SYSTEM ZUM MANIPULATIONSSICHEREN EINRICHTEN EINES KRYPTOGRAPHISCHEN SCHLÜSSELS**
METHOD AND SYSTEM FOR THE MANIPULATION PROTECTED GENERATION OF A CRYPTOGRAPHIC KEY
PROCÉDÉ ET SYSTÈME D'ÉTABLISSEMENT D'UNE CLÉ CRYPTOGRAPHIQUE SANS RISQUE DE MANIPULATION

(30) Priorität: 26.04.2006 DE 102006019466
(43) Veröffentlichungstag der Anmeldung: 07.01.2009
(73) Patentinhaber: SIEMENS AKTIENGESELLSCHAFT, 80333 München (DE)
(72) Erfinder: FALK, Rainer, 85435 Erding (DE); KOHLMAYER, Florian, 82319 Starnberg (DE)
(86) Internationale Anmeldenummer: PCT/EP2007/051191
(87) Internationale Veröffentlichungsnummer: WO 2007/124965

(56) Entgegenhaltungen:
- DE-A1- 10 358 987
- US-A1- 2005 010 680
- US-A1- 2005 128 989

## Beschreibung

Die Erfindung betrifft ein Verfahren und ein System zum manipulationssicheren Einrichten eines gemeinsamen kryptographischen Schlüssels zwischen zwei Knoten über eine Funkschnittstelle.

In Kurzstreckenfunksystemen wie Bluetooth, WLAN, ZigBee oder WiMax kommunizieren Endgeräte miteinander über eine Funkschnittstelle. Zum Schutz der über die Funkschnittstelle übertragenen Informationen vor Manipulation oder Mithören durch Dritte werden die Informationen zwischen den Knoten bzw. Endgeräten des Kurzstreckenfunksystems verschlüsselt übertragen. Hierzu ist es notwendig, dass die Endgeräte bzw. Knoten einen gemeinsamen kryptographischen Schlüssel einrichten.

Bei Kurzstreckenfunksystemen muss der Endanwender den kryptographischen Schlüssel selbst einrichten und wird durch keinen Netzbetreiber hierbei unterstützt. Die Konfiguration bzw. das Einrichten eines kryptographischen Schlüssels ist für private Endanwender umständlich und fehleranfällig. Viele Endanwender neigen dazu, einfache, leicht merkbare Schlüssel bzw. Passwörter einzurichten, beispielsweise "1234", die relativ einfach durch Dritte herauszufinden sind.

Bei der Einrichtung eines gemeinsamen kryptographischen Schlüssels sind herkömmliche Sicherheitsprotokolle bekannt, die einen geheimen Schlüssel einrichten, der nur den aktiv an den Protokollablauf beteiligten Teilnehmern bekannt ist, nicht jedoch einem außenstehenden passiven, d. h. nur lauschenden Angreifer. Zwei bekannte Sicherheitsprotokolle sind das Sicherheitsprotokoll nach Diffie Hellman zur Schlüsselvereinbarung und eine anonyme, nicht authentisierbare Variante des SSL/TLS (Secure Source Layer/Transport Layer Security) -Sicherheitsprotokolls.

Die Schlüsselvereinbarung nach Diffie Hellman ermöglicht die Vereinbarung eines geheimen Schlüssels über einen unsicheren Kanal. Zwei Teilnehmer A, B kennen dabei zwei öffentliche Werte, einen Modulwert m, d. h. eine große Primzahl, und eine ganze Zahl g.

Bei der Schlüsselvereinbarung berechnet A zunächst eine große Zufallszahl a und rechnet anschließend X = g^{a}mod m. Der andere Teilnehmer B berechnet eine große Zufallszahl b und berechnet Y = g^{b}mod m.

Nachdem der Teilnehmer A den berechneten Wert X an den anderen Teilnehmer B gesendet hat, berechnet dieser Teilnehmer B einen Wert W1 = X^{b}mod m.

Der Teilnehmer B sendet den berechneten Wert Y an den Teilnehmer A. Anschließend berechnet der Teilnehmer A den Wert W2 = Y^{a} · mod m. Die beiden von den Teilnehmern A, B berechneten Werte W1, W2 sind g^{db}modm. Die berechneten Werte W1, W2 stellen den gemeinsamen geheimen Schlüssel der beiden Teilnehmer A, B dar. Dieser vereinbarte Schlüssel S kann ohne Kenntnis von A, B durch einen Dritten nicht erzeugt werden. Die Umkehrung der von A, B durchgeführten Exponentiation benötigt extrem viele Berechnungsschritte und dauert entsprechend lang. Diese Eigenschaft stellt die Geheimhaltung des vereinbarten gemeinsamen Schlüssels W1 = W2 = S sicher.

Ein derart vereinbarter gemeinsamer kryptographischer Schlüssel S ist sicher gegenüber passiven Angriffen Dritter, d. h. sicher gegenüber Abhören durch Dritte. Allerdings ist ein derartiges Einrichten eines gemeinsamen Schlüssels S nicht sicher gegen einen aktiven Angreifer (Man in the middle), der die Kommunikation zwischen den beiden Teilnehmern manipuliert, wenn die Schlüsselvereinbarung nicht authentisiert abläuft. Dann ist es nämlich möglich, dass eine "konstruierte" Nachricht nicht von dem angeblichen Sender, sondern von einem unbefugten Dritten stammt. Der Empfänger der Nachricht ist nicht in der Lage, diesen Unterschied zu bemerken.

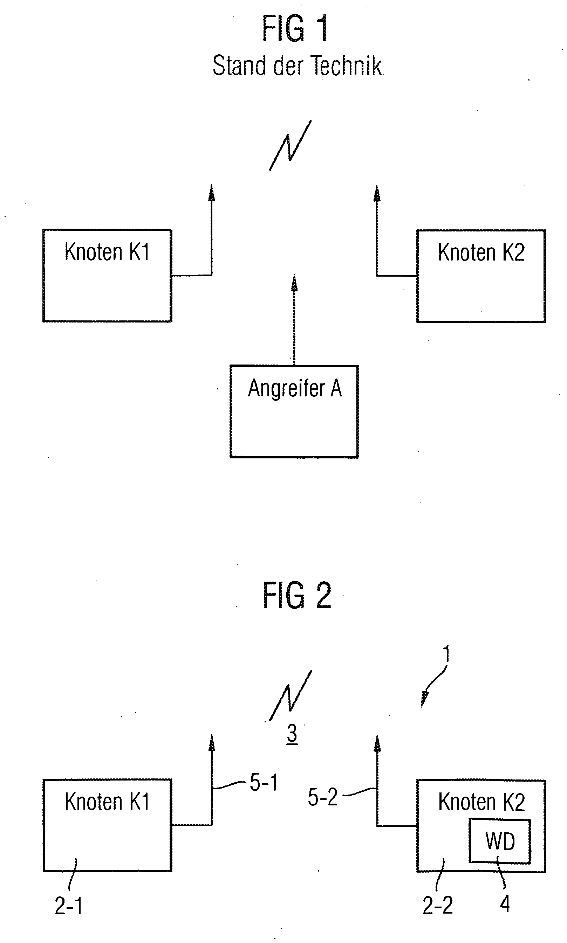

Figur 1 zeigt schematisch einen aktiven Angriff durch einen dritten Knoten beim Einrichten eines gemeinsamen kryptographischen Schlüssels S zwischen zwei Knoten K1, K2 bei einem herkömmlichen Schlüsselvereinbarungsprotokoll. Der Angreifer A versucht beispielsweise den Ablauf bzw. die Abfolge der gemäß dem Sicherheitsprotokoll ausgetauschten Nachrichten derart zu beeinflussen, dass nach Ablauf des Sicherheitsprotokolls eine Sicherheitsbeziehung zwischen dem ersten Knoten K1 und dem Angreifer A und eine weitere Sicherheitsbeziehung zwischen dem zweiten Knoten K2 und dem Angreifer A eingerichtet ist, sodass der Angreifer A unbemerkt von den beiden Knoten K1, K2 in die Kommunikation zwischen den beiden Knoten K1, K2 eingebunden ist (Man in the middle).

Die US 2005/0010680 A1 offenbart ein Verfahren zum Vereinbaren eines geheimen Schlüssels zwischen zwei Geräten nach einem ESSPP (Enhanced Shared Secret Provisioning Protocol) genannten Protokoll. Während dieses Prozesses überwacht ein Monitoring System den Funkkanal nach weiteren ESSPP Nachrichten eines dritten Gerätes. Auf diese Weise soll ein Man-in-themiddle Angriff zuverlässig erkannt werden, bei dem ein Angreifer einem Kommunikationspartner das jeweilige Gegenüber vortäuscht.

Es ist daher die Aufgabe der vorliegenden Erfindung, ein Verfahren und ein System zum manipulationssicheren Einrichten eines gemeinsamen kryptographischen Schlüssels zwischen zwei Knoten über eine Funkschnittstelle zu schaffen, die auch bei Verwendung eines nicht authentisierenden Schlüsselvereinbarungsprotokoll einen wirksamen Schutz gegenüber aktiven Angriffen bieten.

Diese Aufgabe wird erfindungsgemäß durch ein Verfahren mit den im Patentanspruch 1 angegebenen Merkmalen, durch ein System mit den im Patentanspruch 9 angegebenen Merkmalen und durch ein Kurzstreckenfunkgerät mit den im Patentanspruch 10 angegebenen Merkmalen gelöst.

Die Erfindung schafft ein Verfahren zum manipulationssicheren Einrichten eines gemeinsamen kryptographischen Schlüssels zwischen zwei Knoten über eine Funkschnittstelle, wobei mindestens einer der beiden Knoten während des Einrichtens des gemeinsamen kryptographischen Schlüssels in einem Einrichtungszeitraum überwacht, ob ein dritter Knoten mit einem der beiden Knoten über die Funkschnittstelle kommuniziert. Die beiden Knoten richten den gemeinsamen kryptographischen Schlüssel gemäß einem Schlüsselvereinbarungsprotokoll durch Austausch von vorbestimmten Schlüsselvereinbarungsnachrichten über mindestens einen ersten Funkkanal der Funkschnittstelle ein. Der überwachende Knoten überwacht mehrere Funkkanäle der Funkschnittstelle daraufhin, ob Schlüsselvereinbarungsnachrichten durch einen dritten Knoten an einen der beiden Knoten über die Funkschnittstelle gesendet werden.

Bei dem erfindungsgemäßen Verfahren ist eine Funküberwachungsfunktion vorgesehen zur Erkennung eines eventuell vorhandenen aktiven Angreifers (Man in the middle). Da der aktive Angreifer mit beiden Knoten kommunizieren muss, der räumliche Abstand zwischen den beiden zu konfigurierenden Knoten gering ist und die Kommunikation des Angreifers mit den beiden Knoten über einen Funkkanal erfolgt, kann ein aktiver Angreifer die Kommunikation zwischen den beiden Knoten nicht manipulieren, ohne dass die erfindungsgemäße vorgesehene Funküberwachungsfunktion bemerkt, dass der aktive Angreifer als dritter Knoten beteiligt ist.

Das erfindungsgemäße Verfahren kombiniert somit ein kryptographisches Sicherheitsverfahren mit einem nicht kryptographischen Funküberwachungsverfahren bei der Einrichtung eines gemeinsamen kryptographischen Schlüssels, der sicher gegenüber aktiven Angreifern ist.

Bei einer ersten Ausführungsform des erfindungsgemäßen Verfahrens bricht der überwachende Knoten das Einrichten des gemeinsamen kryptographischen Schlüssels mit dem anderen Knoten ab, wenn der überwachende Knoten erkennt, dass ein dritter Knoten über die Funkschnittstelle mit einem der beiden Knoten kommuniziert.

Bei einer alternativen Ausführungsform des erfindungsgemäßen Verfahrens bricht der überwachende Knoten das Einrichten des gemeinsamen kryptographischen Schlüssels mit dem anderen Knoten nicht ab, wenn ein dritter Knoten über die Funkschnittstelle mit einem der beiden Knoten kommuniziert, wobei allerdings der eingerichtete kryptographische Schlüssel als ein unsicherer kryptographischer Schlüssel abgespeichert wird.

Bei einer bevorzugten Ausführungsform des erfindungsgemäßen Verfahrens überwacht der überwachende Knoten, ob eine Fehlerwarnnachricht von einem anderen Knoten gesendet wird.

Bei einer bevorzugten Ausführungsform des erfindungsgemäßen Verfahrens überwacht der überwachende Knoten, ob während des Einrichtens des kryptographischen Schlüssels in dem Einrichtungszeitraum eine Funkkanalqualität abfällt.

Bei einer bevorzugten Ausführungsform des erfindungsgemäßen Verfahrens überwacht der überwachende Knoten zusätzlich, ob ein dritter Knoten während Schutzzeiträumen vor und nach dem Einrichtungszeitraum mit einem der beiden Knoten über die Funkschnittstelle kommuniziert.

Bei einer bevorzugten Ausführungsform des erfindungsgemäßen Verfahrens werden die Knoten durch Kurzstreckenfunkgeräte gebildet.

Die Erfindung schafft ferner ein Kurzstreckenfunksystem mit mehreren Kurzstreckenfunkgeräten, die über eine Funkschnittstelle miteinander kommunizieren, wobei beim Einrichten eines gemeinsamen kryptographischen Schlüssels zwischen zwei Kurzstreckenfunkgeräten des Kurzstreckenfunksystems mindestens eines der beiden Kurzstreckenfunkgeräte während des Einrichtens des kryptographischen Schlüssels über die Funkschnittstelle in einem Einrichtungszeitraum überwacht, ob ein weiteres Kurzstreckenfunkgerät mit einem der beiden Kurzstreckenfunkgeräte über die Funkschnittstelle kommuniziert. Die beiden Kurzstreckenfunkgeräte richten den gemeinsamen kryptographischen Schlüssel gemäß einem Schlüsselvereinbarungsprotokoll durch Austausch von vorbestimmten Schlüsselvereinbarungsnachrichten über mindestens einen ersten Funkkanal der Funkschnittstelle ein. Das überwachende Kurzstreckenfunkgerät überwacht mehrere Funkkanäle der Funkschnittstelle daraufhin, ob Schlüsselvereinbarungsnachrichten durch das weitere Kurzstreckenfunkgerät an eines der beiden Kurzstreckenfunkgerät über die Funkschnittstelle gesendet werden.

Die Erfindung schafft ferner ein Kurzstreckenfunkgerät, das bei einem Einrichten eines gemeinsamen kryptographischen Schlüssels mit einem anderen Kurzstreckenfunkgerät über eine Funkschnittstelle diese Funkschnittstelle zum Erkennen einer Manipulation dahingehend überwacht, ob während des Einrichtens des gemeinsamen kryptographischen Schlüssels ein drittes Kurzstreckenfunkgerät mit einem der beiden Kurzstreckenfunkgeräte über eine Funkschnittstelle kommuniziert. Die beiden Kurzstreckenfunkgeräte richten den gemeinsamen kryptographischen Schlüssel gemäß einem Schlüsselvereinbarungsprotokoll durch Austausch von vorbestimmten Schlüsselvereinbarungsnachrichten über mindestens einen ersten Funkkanal der Funkschnittstelle ein. Das überwachende Kurzstreckenfunkgerät überwacht mehrere Funkkanäle der Funkschnittstelle daraufhin, ob Schlüsselvereinbarungsnachrichten durch dritte Kurzstreckenfunkgerät an eines der beiden Kurzstreckenfunkgerät über die Funkschnittstelle gesendet werden.

Im Weiteren werden bevorzugte Ausführungsformen des erfindungsgemäßen Verfahrens und des erfindungsgemäßen Kurzstreckenfunksystems unter Bezugnahme auf die beigefügten Figuren zur Erläuterung erfindungswesentlicher Merkmale beschrieben.

Es zeigen:
- Figur 1:: ein Diagramm zur Erläuterung der der Erfindung zugrunde liegenden Problematik;
- Figur 2:: ein Blockdiagramm eines erfindungsgemäßen Kurzstreckenfunksystems mit zwei Kurzstreckenfunkgeräten mit Funküberwachungsfunktion;
- Figur 3:: ein Blockschaltbild einer bevorzugten Ausführungsform eines in dem erfindungsgemäßen Kurzstreckenfunksystem eingesetzten Kurzstreckenfunkgerätes mit Funküberwachungsfunktion;
- Figur 4:: ein Signaldiagramm zur Erläuterung des erfindungsgemäßen Verfahrens zum Einrichten eines gemeinsamen kryptographischen Schlüssels ohne einen aktiven Angriff durch einen Dritten;
- Figur 5:: ein Signaldiagramm des erfindungsgemäßen Verfahrens zum Einrichten eines gemeinsamen kryptographischen Schlüssels bei einem aktiven Angriff durch einen Dritten.

Wie man aus Figur 2 erkennen kann, weist ein erfindungsgemäßes Kurzstreckenfunksystem 1 mindestens zwei Kurzstreckenfunkgeräte bzw. Knoten 2-1, 2-2 auf. Die Kurzstreckenfunkgeräte 2-1, 2-2 kommunizieren miteinander mittels Sende-/Empfangsantennen 5-1, 5-2 über eine Funkschnittstelle 3. Mindestens eine der beiden Kurzstreckenfunkgeräte bzw. Knoten weist eine Funküberwachungsfunktion bzw. Watch-Dog-Funktion (WD) auf. Beim Einrichten eines gemeinsamen kryptographischen Schlüssels zwischen den beiden Kurzstreckenfunkgeräten 2-1, 2-2 des Kurzstreckenfunksystems 1 überwacht das Kurzstreckenfunkgerät 2-2, welche eine Funküberwachungseinheit 4 enthält, das Einrichten des kryptographischen Schlüssels über die Funkschnittstelle 3 in einem vorgegebenen Einrichtungszeitraum dahingehend, ob ein weiteres Kurzstreckenfunkgerät mit einem der beiden Kurzstreckenfunkgeräte 2-1, 2-2 über die Funkschnittstelle 3 kommuniziert.

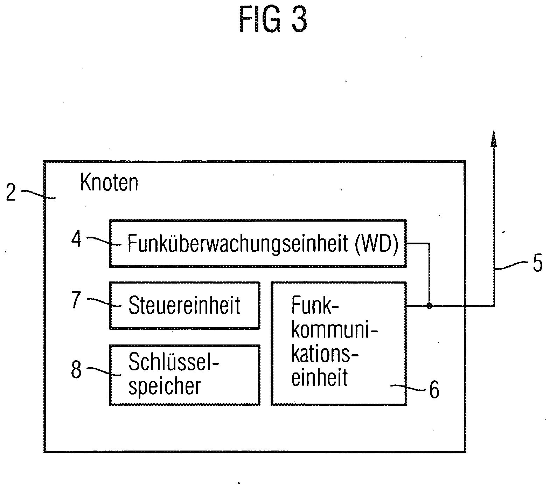

Figur 3 zeigt schematisch ein Blockschaltbild einer bevorzugten Ausführungsform eines Kurzstreckenfunkgerätes bzw. Knotens 2, wie es in dem erfindungsgemäßen Kurzstreckenfunksystem 1 eingesetzt wird. Der Knoten 2 weist eine Funküberwachungseinheit 4 auf, welche Funksignale, die über die Funkschnittstelle 3 übertragen werden, überwacht. Der Knoten 2 weist eine Sende-/Empfangsantenne 5 zum Ausstrahlen und zum Empfangen von Funksignalen auf. Die Sende-/Empfangsantenne 5 ist einerseits mit der Funküberwachungseinheit 4 und andererseits mit einer Funkkommunikationseinheit 6 des Knotens 2 verbunden. Die Funkkommunikationseinheit 6 enthält eine Sende- und eine Empfangseinrichtung zum Aussenden und zum Empfangen von Funksignalen. Die Funküberwachungseinheit 4 kann bei einer Ausführungsform auch als Teil der Funkkommunikationseinheit 6 realisiert sein. Bei einer alternativen Ausführungsform weist die Funküberwachungseinheit 4 eine eigene separate Sendeempfangsantenne auf. Das Kurzstreckenfunkgerät 2 weist vorzugsweise ferner eine Steuereinheit 7 auf, in der ein Programm entsprechend dem erfindungsgemäßen Verfahren abläuft. Das Kurzstreckenfunkgerät 2 enthält einen Speicher 8 zum Abspeichern eines eingerichteten kryptographischen Schlüssels, der zur Verschlüsselung von Nachrichten eingesetzt wird.

Wie man aus Figur 2 erkennen kann, müssen nicht alle Kurzstreckenfunkgeräte 2 bzw. Knoten 2 des erfindungsgemäßen Kurzstreckenfunksystems 1 eine Funküberwachungseinheit 4 enthalten, sondern lediglich mindestens einer der beiden Knoten, die einen gemeinsamen kryptographischen Schlüssel vereinbaren möchten. Erkennt die Funküberwachungseinheit 4 des überwachenden Knoten 2-2 zum Einrichten des gemeinsamen kryptographischen Schlüssels, dass ein dritter Knoten über die Funkschnittstelle 3 mit einem der beiden Knoten 2-1, 2-2 kommuniziert, wird bei einer ersten Ausführungsform des erfindungsgemäßen Verfahrens der Einrichtungsvorgang durch die Steuereinheit 7 des überwachenden Knotens 2-2 abgebrochen. Bei einer alternativen Ausführungsform wird zum Erkennen eines dritten Knotens das Einrichten des gemeinsamen kryptographischen Schlüssels durch den überwachenden Knoten 2-2 nicht unterbrochen, jedoch der eingerichtete kryptographische Schlüssel in den beiden Schlüsselspeichern 8 der beiden Knoten 2-1, 2-2 jeweils als "unsicher" gekennzeichnet abgespeichert. Wird durch die Funküberwachungseinheit 4 des überwachenden Knotens 2-2 die Kommunikation eines dritten Knotens über die Funkschnittstelle 3 mit einem der beiden Knoten 2-1, 2-2 erkannt, generiert bei einer bevorzugten Ausführungsform der überwachende Knoten 2-2 eine Fehlernachricht und strahlt diese über die Funkschnittstelle 3 aus. Bei dem erfindungsgemäßen Verfahren erfolgt das Einrichten des gemeinsamen kryptographischen Schlüssels zwischen den beiden Knoten 2-1, 2-2 über die Funkschnittstelle 3 gemäß einem vorgegebenen Schlüsselvereinbarungsprotokoll, bei dem vorbestimmte Schlüsselvereinbarungsnachrichten über mindestens einen Funkkanal der Funkschnittstelle 3 zwischen den Knoten 2-1, 2-2 ausgetauscht werden. Bei diesem Schlüsselvereinbarungsprotokoll handelt es sich beispielsweise um ein Diffie-Hellman-Schlüsselvereinbarungsprotokoll oder ein SSL/DLS-Schlüsselvereinbarungsprotokoll. Diese beiden Schlüsselvereinbarungsprotokolle sind nicht-authentisierende Schlüsselvereinbarungsprotokolle, d.h. ein Knoten, welcher Nachrichten empfängt, hat keine Möglichkeit, mit Sicherheit festzustellen, von welchem Sender die Nachricht stammt.

Zur Erhöhung des Schutzes kann bei dem erfindungsgemäßen Verfahren anschließend an ein nicht-authentisierendes Schlüsselvereinbarungsprotokoll eine Authentisierung mittels einer PIN-Nummer erfolgen. Bei einer alternativen Ausführungsform vergleicht der Benutzer nach Vereinbarung des gemeinsamen kryptographischen Schlüssels zur Erhöhung des Schutzes den auf beiden Kurzstreckenfunkgeräten eingerichteten kryptographischen Schlüssel bzw. dessen Hash-Wert oder der von einem Kurzstreckenfunkgerät angezeigte kryptographische Schlüssel wird auf dem anderen Knoten bzw. Kurzstreckenfunkgerät eingegeben. Das erfindungsgemäße Verfahren verbessert durch die Funküberwachungsfunktion die Sicherheit des Einrichtens des gemeinsamen kryptographischen Schlüssels zwischen zwei Kurzstreckenfunkgeräten. Verwendet man ein nicht-authentisierendes Schlüsselvereinbarungsprotokoll, kann bei dem erfindungsgemäßen Verfahren ganz auf die Eingabe einer PIN-Nummer bzw. eines Passwortes bzw. auf die Überprüfung des eingerichteten gemeinsamen Schlüssels durch den Benutzer verzichtet werden. Alternativ ist es jedoch möglich, zusätzlich zu der Funküberwachungsfunktion auch eine Authentisierung bei der Schlüsselvereinbarung vorzunehmen, um die Sicherheit der Kommunikationsstrecke zwischen den Kurzstreckenfunkgeräten gegenüber Angriffen zu erhöhen.

Bei einer ersten Ausführungsform des erfindungsgemäßen Verfahrens überwacht der überwachende Knoten 2-2 lediglich einen Funkkanal der Funkschnittstelle. Hierbei erfolgt die Einrichtung des gemeinsamen kryptographischen Schlüssels zwischen den Knoten auf einem zuvor festgelegten Funkkanal. Dies hat den Vorteil, dass der schaltungstechnische Aufwand zur Realisierung der Funküberwachung gering ist, da nur Funksendungen auf dem vorgegebenen Funkkanal überwacht werden.

Bei einer alternativen Ausführungsform überwacht die Funküberwachungseinheit mehrere Funkkanäle der Funkschnittstelle 3.

Bei dem Funkkanal handelt es sich um einen beliebigen Funkkanal, beispielsweise um einen FDM-Funkkanal (Frequency Division Multiplexing), einen TDM-Funkkanal (Time Division Multiplexing) oder um einen CDM-Funkkanal (Code Division Multiplexing). Die Funküberwachungseinheit 4 überwacht, ob irgendeine verdächtige Kommunikation zwischen einem der beiden Knoten 2-1, 2-2 und einem dritten Knoten erfolgt. Hierzu überwacht die Funküberwachungseinheit 4 des überwachenden Knotens 2-2, ob Schlüsselvereinbarungsnachrichten durch einen dritten Knoten an einem der beiden Knoten über die Funkschnittstelle 3 gesendet werden.

Zusätzlich überwacht die Funküberwachungseinheit 4, ob eine generierte Fehlerwarnnachricht ausgesendet wurde.

Weiterhin kann die Funküberwachungseinheit 4 überwachen, ob während des Einrichtens des kryptographischen Schlüssels in einem vorbestimmten Einrichtungszeitraum eine Funkkanalqualität abfällt. Der signifikante Abfall der Kanalqualität während der Einrichtungsprozedur im Vergleich zu einer vorher beobachteten Kanalqualität ist ein Indiz dafür, dass über die Funkschnittstelle eine weitere Kommunikation erfolgt. Ein Abfall der Kanalqualität äußert sich insbesondere in einer erhöhten Paketverlustwahrscheinlichkeit. Bei einer möglichen Ausführungsform des erfindungsgemäßen Verfahrens wird das Einrichten des gemeinsamen kryptographischen Schlüssels zwischen den beiden Knoten unterbrochen, wenn eine Störung im Übertragungskanal, beispielsweise ein aufgetretener Datenpaketverlust, durch den überwachenden Knoten 2-2 beobachtet wird.

Ferner kann die Funküberwachungseinheit 4 überwachen, ob ein weiterer Knoten auf dem gleichen Funkkanal aktiv ist, wobei dies durch dessen Adresse beispielsweise eine MAC-Adresse erkennbar ist. Weiterhin kann die Funküberwachungseinheit 4 überwachen, ob der eigene Netzwerkname (WLAN-SSID) an mehreren Access Points angegeben wird, d. h. auf dem gleichen oder einem anderen Funkkanal. Es besteht nämlich die Möglichkeit, dass ein Knoten mit dem gleichen Netzwerknamen von einem Angreifer aufgestellt worden ist.

Stellt die Funküberwachungseinheit 4 eine der oben genannten verdächtigen Kommunikationsarten fest, besteht die Möglichkeit, dass ein aktiver Angriff durch einen Dritten erfolgt. Die oben genannten verdächtigen Kommunikationsarten werden vorzugsweise separat beobachtet und bei Auftreten mindestens einer verdächtigen Kommunikationsart wird bei einer möglichen Ausführungsform des erfindungsgemäßen Verfahrens das Einrichten des gemeinsamen kryptographischen Schlüssels abgebrochen. Bei einer alternativen Ausführungsform werden die verschiedenen verdächtigen Kommunikationsarten separat überwacht und anschließend bei ihrem Auftreten gewichtet addiert. Überschreitet der so gebildete gewichtete Summenwert einen bestimmten Schwellenwert, erfolgt bei einer Ausführungsform des erfindungsgemäßen Verfahrens der Abbruch des Einrichtens des gemeinsamen kryptographischen Schlüssels.

Bei einer weiteren Ausführungsform des erfindungsgemäßen Verfahrens überwacht der überwachende Knoten zusätzlich, ob ein dritter Knoten während Schutzzeiträumen vor und nach dem Einrichtungszeitraum mit einem der beiden Knoten über die Funkschnittstelle 3 kommuniziert. Dadurch, dass auch vor und nach dem eigentlichen Einrichtungszeitraum eine Überwachung erfolgt, ist derjenige Zeitraum geschützt, der von einem Benutzer als Einrichtungsphase wahrgenommen wird, d. h. vom Start der Einrichtung bis zu deren Beendigung. Hierdurch wird verhindert, dass kurz aufeinander folgend, d. h. für den Benutzer kaum oder nicht wahrnehmbar zwei oder gar noch mehr getrennte Einrichtungsvorgänge erfolgen. Hierdurch wird verhindert, dass ein Angreifer einen Angreiferknoten erst mit dem einen Knoten 2-1 und später unabhängig mit dem anderen Knoten 2-1 verknüpft. Die Schutzzeiträume vor und nach dem Einrichtungszeitraum werden deshalb vorzugsweise derart groß gewählt, um Angriffe leicht zu erkennen, beispielsweise im Bereich von 1 bis 5 Sekunden.

Zur Realisierung der Schutzzeiträume werden bei einer bevorzugten Ausführungsform des erfindungsgemäßen Verfahrens Timer- bzw. Zähleinrichtungen vorgesehen, um zu überwachen, ob in einem zurückliegenden Schutzzeitraum oder in einem nachfolgenden Schutzzeitraum eine verdächtige Kommunikation aufgetreten ist. Die Timer bzw. Zähler sind vorzugsweise in der Steuereinheit 7 des Knotens vorgesehen.

Wird eine verdächtige Kommunikation von der Funküberwachungseinheit 4 erkannt, so wird ein Timer gestartet. Dies erfolgt unabhängig davon, ob sich das Kurzstreckenfunkgerät bzw. der Knoten 2 gerade in einem Bindungsbetriebsmodus befindet oder nicht. Dadurch wird eine Überwachung des Funkkanals vor der eigentlichen Bindungsprozedur, bei der der gemeinsame kryptographische Schlüssel eingerichtet wird, erreicht. Wenn eine Bindungsprozedur eingeleitet wird, kann dadurch abgefragt werden, ob in einem zurückliegenden durch den Timer vorgegebenen Zeitintervall eine derartige verdächtige Kommunikationsart beobachtet wurde. Bei einer bevorzugten Ausführungsform wird der Funkkanal bzw. die Funkkanäle durch die Funküberwachungseinheit 4 auch nach Abschluss des Einrichtungsvorgangs zum Einrichten des gemeinsamen kryptographischen Schlüssels überwacht. Die Funküberwachungsfunktion ist hierbei nach Einrichten des Schlüssels noch für eine vorgegebene Zeitspanne aktiv und meldet verdächtige Kommunikationsarten. Hierdurch wird eine Überwachung des Funkkanals über einen gesamten Zeitraum erreicht, der eine gewisse Zeitspanne vor und nach dem Einrichtungszeitraum zum Einrichten des kryptographischen Schlüssels umfasst.

Bei einer alternativen Ausführungsform wird dies durch Verzögerungen während der Bindungsprozedur erreicht. Bei Beginn der Bindungsprozedur wird für eine gewisse Zeitspanne der Funkkanal dahingehend überwacht, ob eine verdächtige Kommunikationsart auftritt. Hierdurch verlängert sich zwar die für die Bindung benötigte Zeitdauer, jedoch muss die Überwachungsfunktion nicht außerhalb der Bindungsphase aktiv sein.

Bei Auftreten einer verdächtigen Kommunikationsart wird bei einer ersten Ausführungsform die Schlüsseleinrichtung vollständig abgebrochen, d. h. es wird kein gemeinsamer kryptographischer Schlüssel eingerichtet. Bei einer alternativen Ausführungsform wird im Verdachtsfall der kryptographische Schlüssel eingerichtet, jedoch als weniger vertrauenswürdig in dem Schlüsselspeicher 8 abgespeichert. Eine explizite Bestätigung erfolgt durch die Benutzer anschließend durch Vergleich oder durch zusätzliche Authentisierung mittels einer PIN-Nummer.

Die Knoten 2-1, 2-2 werden durch Kurzstreckenfunkgeräte mit einer relativ geringen Reichweite gebildet. Bei einer bevorzugten Ausführungsform handelt es sich bei den Kurzstreckenfunkgeräten um WLAN-, Bluetooth-, ZigBee oder WiMax-Funkendgeräte. Die Knoten 2-1, 2-2 bzw. die Funkgeräte können mobile Endgeräte oder Feststationen sein.

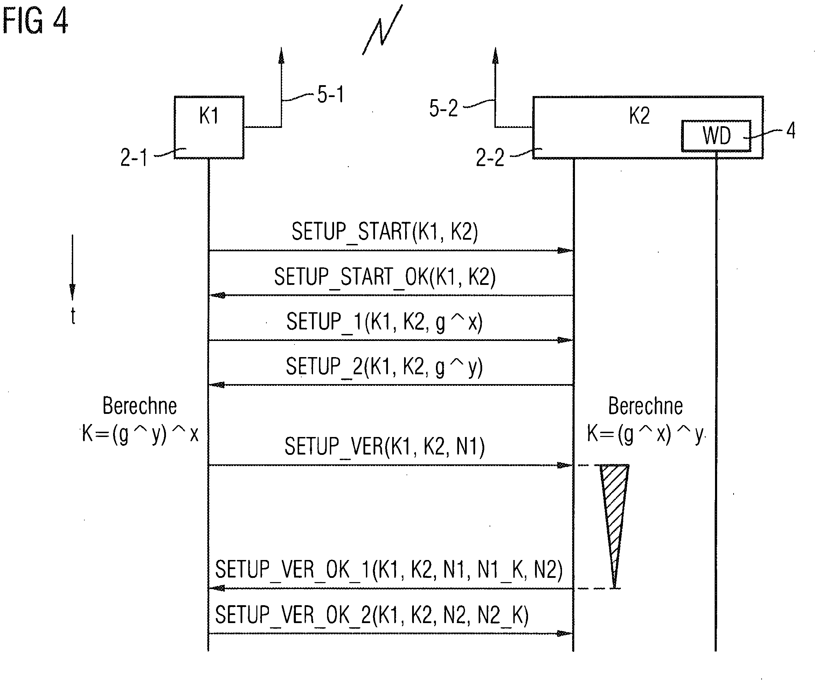

Figur 4 zeigt ein Signaldiagramm, welches das Einrichten eines gemeinsamen Schlüssels S zwischen zwei Knoten 2-1, 2-2 ohne einen aktiven Angriff durch einen dritten Knoten darstellt.

Das Kurzstreckenfunkgerät 2-1 bzw. der Knoten K1 sendet eine Setup-Startnachricht an das zweite Kurzstreckenfunkgerät 2-1 bzw. den Knoten K2. Dies wird anschließend in einer Setup-Start-Okay-Nachricht durch den zweiten Knoten bestätigt. Anschließend sendet das erste Kurzstreckenfunkgerät 2-1 an den zweiten Knoten 2-2 einen Wert g^{x}, wobei g eine ganze Zahl ist und x eine von dem ersten Knoten 2-1 berechnete Zufallszahl darstellt. Der zweite Knoten 2-2 überträgt umgekehrt an den ersten Knoten 2-1 einen Wert g^{Y}, wobei g eine allen beiden Knoten bekannte ganze Zahl darstellt und y ein von dem zweiten Knoten 2-2 berechneter Zufallswert ist. Beide Knoten 2-1, 2-2 berechnen anschließend den gemeinsamen Schlüssel S = ***Y^{X}* mod *m*** bzw. S = ***X^{y}* mod *m***. Der gemeinsame kryptographische Schlüssel S wird anschließend jeweils in den Schlüsselspeicher 8 des jeweiligen Knotens abgelegt. Bei einer möglichen Ausführungsform wird ein aus dem kryptographischen Schlüssel abgeleiteter pseudo-zufälliger Schlüssel, der beispielsweise eine geringere Bitlänge aufweist, in dem Schlüsselspeicher 8 abgespeichert.

Vorzugsweise erfolgt anschließend eine Überprüfung bzw. Verifikation dahingehend, ob beide Knoten 2-1, 2-2 den gleichen gemeinsamen Schlüssel ermittelt haben. Dabei wird vorzugsweise eine festgelegte Zeitspanne abgewartet, während der keine verdächtige Kommunikation auftreten darf. Hierzu wird ein Timer innerhalb der Funküberwachungseinheit 4 des überwachenden Knotens 2-2 verwendet. Nach Ablauf der Wartezeit wird die Überprüfung bzw. Verifikation abgeschlossen.

Zahlreiche Abwandlungen des in Figur 4 dargestellten Vorgangs sind möglich. Beispielsweise kann bei einer Ausführungsform das Einrichten des gemeinsamen kryptographischen Schlüssels direkt ohne Startnachrichten erfolgen. Weiterhin ist es möglich, dass die Wartezeit bereits nach der Nachricht "Setup 2" oder nach Berechnung und Abspeicherung des Schlüssels K beginnt. Bei einer weiteren Ausführungsform wird als zusätzliche Überwachungswartezeit ein Zeitraum überwacht, der erst nach der Nachricht "Setup_Ver OK ·2" beginnt. Bei einer alternativen Ausführungsform wird auf eine Verifikation des eingerichteten gemeinsamen Schlüssels vollständig verzichtet.

Die Zeitspanne zur Überwachung zufälliger Kommunikationen kann innerhalb eines großen Bereichs variieren. Der Zeitraum wird derart gewählt, dass in dem Zeitraum, den der Benutzer zum Einrichten des Schlüssels wahrnimmt, nur zwei Geräte aktiv sind. Vorzugsweise wird der Timerwert in einem Bereich von ca. 1 bis 5 Sekunden eingerichtet.

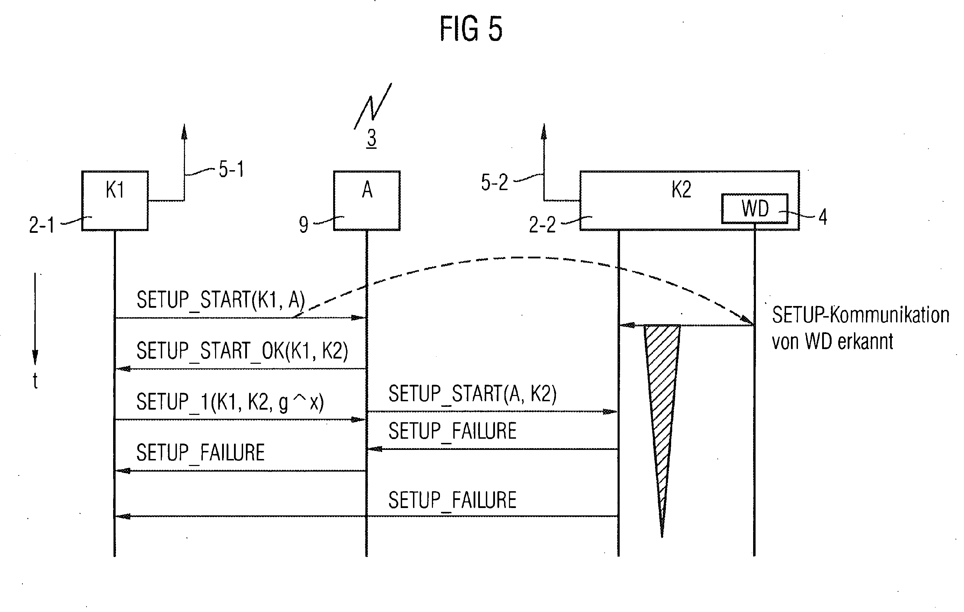

Figur 5 zeigt ein Signaldiagramm bei einem aktiven Angriff durch einen dritten Knoten 9. Der Knoten 2-2 kann dabei an sich nicht unterscheiden, ob der Knoten 2-1 oder der in Figur 5 dargestellte dritte Knoten 9 ein angreifender Knoten ist. Die Funküberwachungseinheit 4 des überwachenden Knotens 2-2 erkennt jedoch, dass mehr als ein Knoten über die Funkschnittstelle 3 kommuniziert bzw. aktiv sind. Der Austausch der Schlüsselvereinbarungsprotokollnachrichten beginnt wie in Figur 4 dargestellt, nur dass das Einrichten nicht zwischen den Knoten 2-1, 2-2 erfolgt, sondern zwischen den Knoten 2-1 und dem angreifenden Knoten 9. Sobald jedoch der angreifende Knoten 9 aktiv wird, d. h. ebenfalls eine Setup-Start-Nachricht an den Knoten 2-2 sendet, erkennt die Funküberwachungseinheit 4 des überwachenden Knotens dies und signalisiert eine verdächtige Kommunikation. Das Einrichten des kryptographischen Schlüssels wird daraufhin durch die Steuereinheit 7 des überwachenden Knotens 2-2 abgebrochen. Der überwachende Knoten 2-2 erkennt die verdächtige Kommunikation zwischen dem Knoten 2-1 und dem angreifenden Knoten 9 erst als Fehler, wenn er selbst auch in einem Modus zum Einreichten eines gemeinsamen kryptographischen Schlüssels versetzt wird. Andernfalls könnte es sich bei der Kommunikation zwischen dem Knoten 2-1 und dem Knoten 9 um ein gewünschtes Einrichten eines Schlüssels bzw. einer Sicherheitsbeziehung zwischen den beiden Knoten 2-1, 9 handeln. In dem gegebenen Beispiel wird der überwachende Knoten 2-2 in den Modus zum Schlüsseleinrichten durch den Empfang der Nachricht "Setup_Start" (A, K2) versetzt. Alternativ könnte der Knoten 2-2 auch durch eine Benutzerinteraktion in den Setup-Modus bzw. den Modus zum Einrichten des Schlüssels versetzt werden.

Sobald die Steuereinheit 7 des überwachenden Knotens 2-2 das Einrichten des gemeinsamen Schlüssels abbricht, sendet der überwachende Knoten 2-2 über seine Antenne 5-2 eine Setup-Failure-Nachricht an die anderen Knoten bzw. an alle als vorhanden erkannten Knoten in einer Multicast-Sendung bzw. in einer Broadcast-Sendung aus. Sobald der Knoten 2-1 die Setup-Failure-Nachricht von dem überwachenden Knoten 2-2 erhält, bricht er ebenfalls den Vorgang zum Einrichten des gemeinsamen Schlüssels ab. Bei einer möglichen Ausführungsform wird der Abbruch des Einrichtungsvorgangs dem Benutzer beispielsweise durch eine blinkende Fehler-LED angezeigt.

Das in Figur 5 dargestellte Diagramm veranschaulicht auch einen Timerwert, welcher misst, wie lange eine beobachtete verdächtigte Kommunikation schon zurückliegt. Mit der Beobachtung der verdächtigen Kommunikation "Setup" (K1, A) wird bei dem in Figur 5 dargestellten Beispiel der Zähler bzw. Timer gestartet und innerhalb von beispielsweise 1 bis 5 Sekunden heruntergezählt. Der Versuch des Einrichtens eines Schlüssels mit dem überwachenden Knoten 2-2 vor Ablauf des Timers führt zu der Fehlernachricht "Setup_Failure". Eine weiter zurückliegende verdächtige Kommunikation, beispielsweise 5 Minuten vorher, führt nicht zu einem Abbruch.

Bei einer bevorzugten Ausführungsform ist die Funküberwachungsfunktion der Funküberwachungseinheit 4 auch schon vor und nach dem eigentlichen Einrichten aktiv. Wenn innerhalb dieser Zeitspanne ein verdächtiges Funksignal erkannt wird, wird das Einrichten des Knotens nachträglich gelöscht bzw. schon von Anfang an mit einer Fehlernachricht "Setup_Failure" abgewiesen. Bei einer alternativen Ausführungsform wird die Funküberwachungsfunktion erst mit dem Beginn des Einrichtens aktiviert und/oder mit dem Beenden des Einrichtens wieder deaktiviert. In dieser Ausführungsform ist dann kein zeitlicher Sicherheitspuffer vor bzw. nach dem eigentlichen Einrichten vorgesehen. Es kann alternativ jedoch eine entsprechende Wartezeit bzw. Verzögerung während des Einrichtungsvorgangs vorgesehen werden.

Ein gewisser zusätzlicher Schutz kann dadurch erreicht werden, dass man kurze zeitliche Sicherheitspuffer vorsieht. In diesem Fall ist die Funküberwachung nur während des eigentlichen Einrichtens aktiv und es sind auch keine Wartezeiten während des Einrichtungsvorgangs für die Funküberwachung vorgesehen. In diesem Fall werden aktive Angriffe dann erkannt, wenn sie innerhalb des üblicherweise nur kurzen Einrichtungszeitraums, der beispielsweise nur Sekundenbruchteile dauert, erfolgen.

Durch das erfindungsgemäße Verfahren wird die Sicherheit gegen einen aktiven Angriff auch bei einem nicht sicheren bzw. nicht-authentisierten kryptographischen Einrichtungsverfahren erheblich verbessert.

## Patentansprüche

1. Verfahren zum manipulationssicheren Einrichten eines gemeinsamen kryptographischen Schlüssels zwischen zwei Knoten (2-1, 2-2) über eine Funkschnittstelle (3),
wobei mindestens einer der beiden Knoten (2-1, 2-2) während des Einrichtens des gemeinsamen kryptographischen Schlüssels (S) in einem Einrichtungszeitraum überwacht, ob ein dritter Knoten (9) mit einem der beiden Knoten (2-1, 2-2) über die Funkschnittstelle (3) kommuniziert,
wobei die beiden Knoten (2-1, 2-2) den gemeinsamen kryptographischen Schlüssel gemäß einem Schlüsselvereinbarungsprotokoll durch Austausch von vorbestimmten Schlüsselvereinbarungsnachrichten über einen Funkkanal der Funkschnittstelle (3) einrichten,
**dadurch gekennzeichnet, dass**
der überwachende Knoten (2-2) mehrere Funkkanäle der Funkschnittstelle (3) daraufhin überwacht, ob Schlüsselvereinbarungsnachrichten durch den dritten Knoten (9) an einen der beiden Knoten (2-1, 2-2) über die Funkschnittstelle (3) gesendet werden.

2. Verfahren nach Anspruch 1,
wobei der überwachende Knoten (2-2) das Einrichten des gemeinsamen kryptographischen Schlüssels (S) mit dem anderen Knoten (2-1) abbricht, wenn der überwachende Knoten (2-2) erkennt, dass der dritte Knoten (9) über die Funkschnittstelle (3) mit einem der beiden Knoten (2-1, 2-2) kommuniziert.

3. Verfahren nach Anspruch 1,
wobei der überwachende Knoten (2-2) das Einrichten des gemeinsamen kryptographischen Schlüssels mit dem anderen Knoten (2-1) nicht abbricht, wenn der dritte Knoten (9) über die Funkschnittstelle (3) mit einem der beiden Knoten (2-1, 2-2) kommuniziert, und den eingerichteten kryptographischen Schlüssel (S) als einen unsicheren kryptographischen Schlüssel abspeichert.

4. Verfahren nach Anspruch 2 oder 3,
wobei der überwachende Knoten (2-2) zusätzlich eine Fehlerwarnnachricht sendet, wenn der dritte Knoten (9) über die Funkschnittstelle (3) mit einem der beiden Knoten (2-1, 2-2) in dem Einrichtungszeitraum kommuniziert.

5. Verfahren nach Anspruch 1,
wobei der überwachende Knoten (2-2) überwacht, ob eine Fehlerwarnnachricht von dem dritten Knoten (9) gesendet wird.

6. Verfahren nach Anspruch 1,
wobei der überwachende Knoten (2-2) überwacht, ob während des Einrichtens des kryptographischen Schlüssels in dem Einrichtungszeitraum eine Funkkanalqualität abfällt.

7. Verfahren nach Anspruch 1,
wobei der überwachende Knoten (2-2) zusätzlich überwacht, ob der dritte Knoten (9) während Schutzzeiträumen vor und nach dem Einrichtungszeitraum mit einem der beiden Knoten (2-1, 2-2) über die Funkschnittstelle (3) kommuniziert.

8. Verfahren nach Anspruch 1,
wobei die Knoten (2-1, 2-2) durch Kurzstreckenfunkgeräte (2) gebildet werden.

9. Kurzstreckenfunksystem (1) mit mehreren Kurzstreckenfunkgeräten (2), die über eine Funkschnittstelle (3) miteinander kommunizieren,
wobei beim Einrichten eines gemeinsamen kryptographischen Schlüssels (S) zwischen zwei Kurzstreckenfunkgeräten (2-1, 2-2) des Kurzstreckenfunksystems (1) mindestens eines der beiden Kurzstreckenfunkgeräte (2-1, 2-2) während des Einrichtens des kryptographischen Schlüssels (S) über die Funkschnittstelle (3) in einem Einrichtungszeitraum überwacht, ob ein weiteres Kurzstreckenfunkgerät (9) mit einem der beiden Kurzstreckenfunkgeräte (2-1, 2-2) über die Funkschnittstelle (3) kommuniziert,
wobei die beiden Kurzstreckenfunkgeräte (2-1, 2-2) den gemeinsamen kryptographischen Schlüssel gemäß einem Schlüsselvereinbarungsprotokoll durch Austausch von vorbestimmten Schlüsselvereinbarungsnachrichten über einen Funkkanal der Funkschnittstelle (3) einrichten,
**dadurch gekennzeichnet, dass**
das überwachende Kurzstreckenfunkgerät (2-2) mehrere Funkkanäle der Funkschnittstelle (3) daraufhin überwacht, ob Schlüsselvereinbarungsnachrichten durch das weitere Kurzstreckenfunkgerät (9) an eines der beiden Kurzstreckenfunkgerät (2-1, 2-2) über die Funkschnittstelle (3) gesendet werden.

10. Kurzstreckenfunkgerät (2), das bei einem Einrichten eines gemeinsamen kryptographischen Schlüssels (S) mit einem anderen Kurzstreckenfunkgerät (2) über eine Funkschnittstelle (3) diese Funkschnittstelle (3) zum Erkennen einer Manipulation dahingehend überwacht, ob während des Einrichtens des gemeinsamen kryptographischen Schlüssels (S) ein drittes Kurzstreckenfunkgerät (9) mit einem der beiden Kurzstreckenfunkgeräte (2-1, 2-2) über die Funkschnittstelle (3) kommuniziert, wobei die beiden Kurzstreckenfunkgeräte (2) den gemeinsamen kryptographischen Schlüssel gemäß einem Schlüsselvereinbarungsprotokoll durch Austausch von vorbestimmten Schlüsselvereinbarungsnachrichten über einen Funkkanal der Funkschnittstelle (3) einrichten,
**dadurch gekennzeichnet, dass**
das überwachende Kurzstreckenfunkgerät (2) mehrere weitere Funkkanäle der Funkschnittstelle (3) daraufhin überwacht, ob Schlüsselvereinbarungsnachrichten durch das dritte Kurzstreckenfunkgerät (9) an eines der beiden Kurzstreckenfunkgeräte (2-1, 2-2) über die Funkschnittstelle (3) gesendet werden.

## Claims

1. Method for manipulation-protected creation of a common cryptographic key between two nodes (2-1, 2-2) over a radio interface (3),
with at least one of the two nodes (2-1, 2-2), during the creation of the common cryptographic key (S), monitoring in a creation period whether a third node (9) is communicating with one of the two nodes (2-1, 2-2) via the radio interface (3), with the two nodes (2-1, 2-2) creating the common cryptographic key in accordance with a key negotiation protocol by exchanging predefined key negotiation messages via at least one radio channel of the radio interface (3), **characterized in that**
the monitoring node (2-2) monitors a number of channels of the radio interface (3) as to whether key negotiation messages are being sent by the third node (9) to one of the two nodes (2-1, 2-2) via the radio interface (3).

2. Method in accordance with claim 1,
with the monitoring node (2-2) aborting the creation of the common cryptographic key (S) with the other node (2-1) if the monitoring node (2-2) detects that the third node (9) is communicating via the radio interface (3) with one of the two nodes (2-1, 2-2).

3. Method in accordance with claim 1,
with the monitoring node (2-2) not aborting the creation of the common cryptographic key with the other node (2-1) if the third node (9) is communicating via the radio interface (3) with one of the two nodes (2-1, 2-2), and storing the created cryptographic key (S) as an insecure cryptographic key.

4. Method in accordance with claim 2 or 3,
with the monitoring node (2-2) additionally sending an error warning message if the third node (9) is communicating via the radio interface (3) with one of the two nodes 2-2) in the creation period.

5. Method in accordance with claim 1,
with the monitoring node (2-2) monitoring whether an error warning message is being sent from the third node (9).

6. Method in accordance with claim 1,
with the monitoring node (2-2) monitoring, whether the quality of a radio channel drops during the creation of the cryptographic key in the creation period.

7. Method in accordance with claim 1,
with the monitoring node (2-2) additionally monitoring whether the third node (9) is communicating with one of the two nodes (2-1, 2-2) via the radio interface (3) during guard times before and after the creation period.

8. Method in accordance with claim 1,
with the nodes (2-1, 2-2) being embodied by near field communication devices (2).

9. Near field communication system (1) with a number of near field communication devices (2), which communicate with each other via a radio interface (3),
with, when a common cryptographic key (S) is created between two near field communication devices (2-1, 2-2) of the near field communication system (1), at least one of the two near field communication devices (2-1, 2-2) monitoring in a creation period during the creation of the cryptograph key (S) via the radio interface (3) whether a further near field communication device (9) is communicating with one of the two near field communication devices (2-1, 2-2) via the radio interface (3),
with the two near field communication devices (2-1, 2-2) creating the common cryptographic key in accordance with a key negotiation protocol by exchanging predefined key negotiation messages via at least one radio channel of the radio interface (3),
**characterized in that**
the monitoring near field communication device (2-2) monitors a number of channels of the radio interface (3) as to whether key negotiation messages are being sent by the further near field communication device (9) to one of the two near field communication devices (2-1, 2-2) via the radio interface (3)

10. Near field communication device (2), which on creation of a common cryptographic key (S) with another near field communication device (2) via a radio interface (3), monitors the radio interface (3) to detect a manipulation as to whether during the creation of the common cryptographic key (S) a third near field communication device (9) is communicating with one of the two near field communication devices (2-1, 2-2) via the radio interface (3),
with the two near field communication devices (2-1, 2-2) creating the common cryptographic key in accordance with a key negotiation protocol by exchanging predefined key negotiation messages via at least one radio channel of the radio interface (3),
**characterized in that**
the monitoring near field communication device (2-2) monitors a number of further channels of the radio interface (3) as to whether key negotiation messages are being sent by the third near field communication device (9) to one of the two near field communication devices (2-1, 2-2) via the radio interface (3).

## Revendications

1. Procédé d'établissement, protégé contre la manipulation, d'une clé cryptographique commune entre deux noeuds (2-1, 2-2) via une interface radio (3),
- au moins l'un des deux noeuds (2-1, 2-2) surveillant, pendant l'établissement de la clé cryptographique commune (S) durant une période d'établissement, si un troisième noeud (9) communique avec l'un des deux noeuds (2-1, 2-2) via l'interface radio (3),
- les deux noeuds (2-1, 2-2) établissant la clé cryptographique commune conformément à un protocole d'accord de clé par échange de messages d'accord de clé prédéterminés via un canal radio de l'interface radio (3),
**caractérisé en ce que**
le noeud surveillant (2-2) surveille ensuite plusieurs canaux radio de l'interface radio (3) pour établir si des messages d'accord de clé sont envoyés par le troisième noeud (9) à l'un des deux noeuds (2-1, 2-2) via l'interface radio (3).

2. Procédé selon la revendication 1, le noeud surveillant (2-2) arrêtant l'établissement de la clé cryptographique commune (S) avec l'autre noeud (2-1) lorsque le noeud surveillant (2-2) reconnaît que le troisième noeud (9) communique avec l'un des deux noeuds (2-1, 2-2) via l'interface radio (3).

3. Procédé selon la revendication 1, le noeud surveillant (2-2) n'arrêtant pas l'établissement de la clé cryptographique commune avec l'autre noeud (2-1) lorsque le troisième noeud (9) communique avec l'un des deux noeuds (2-1, 2-2) via l'interface radio (3) et sauvegarde en tant que clé cryptographique non sécurisée la clé cryptographique établie (S).

4. Procédé selon la revendication 2 ou 3, le noeud surveillant (2-2) émettant additionnellement un message d'avertissement d'erreur lorsque le troisième noeud (9) communique avec l'un des deux noeuds (2-1, 2-2) via l'interface radio (3) durant la période d'établissement.

5. Procédé selon la revendication 1, le noeud surveillant (2-2) surveillant si un message d'avertissement d'erreur est envoyé par le troisième noeud (9).

6. Procédé selon la revendication 1, le noeud surveillant (2-2) surveillant si une qualité de canal radio se dégrade pendant l'établissement de la clé cryptographique durant la période d'établissement.

7. Procédé selon la revendication 1, le noeud surveillant (2-2) surveillant additionnellement si le troisième noeud (9) communique avec l'un des deux noeuds (2-1, 2-2) via l'interface radio (3) pendant des temps de garde avant et après la période d'établissement.

8. Procédé selon la revendication 1, les noeuds (2-1, 2-2) étant constitués par des appareils radio à courte distance (2).

9. Système radio à courte distance (1) avec plusieurs appareils radio à courte distance (2) qui communiquent entre eux via une interface radio (3), au moins l'un des deux appareils radio à courte distance (2-1, 2-2) surveillant, lors de l'établissement d'une clé cryptographique commune (S) entre deux appareils radio à courte distance (2-1, 2-2) du système radio à courte distance (1), pendant l'établissement de la clé cryptographique (S), via l'interface radio (3), durant une période d'établissement, si un autre appareil radio à courte distance (9) communique avec l'un des deux appareils radio à courte distance (2-1, 2-2) via l'interface radio (3),
les deux appareils radio à courte distance (2-1, 2-2) établissant la clé cryptographique commune conformément à un protocole d'accord de clé par échange de messages d'accord de clé prédéterminés sur un canal radio de l'interface radio (3),
**caractérisé en ce que**
l'appareil radio à courte distance surveillant (2-2) surveille ensuite plusieurs canaux radio de l'interface radio (3) pour constater si des messages d'accord de clé sont envoyés par l'autre appareil radio à courte distance (9) à l'un des deux appareils radio à courte distance (2-1, 2-2) via l'interface radio (3).

10. Appareil radio à courte distance (2) qui, lors de l'établissement d'une clé cryptographique commune (S) avec un autre appareil radio à courte distance (2) via une interface radio (3), surveille cette interface radio (3) pour reconnaître une manipulation en ce sens qu'il est vérifié si, pendant l'établissement de la clé cryptographique commune (S), un troisième appareil radio à courte distance (9) communique avec l'un des deux appareils radio à courte distance (2-1, 2-2) via l'interface radio (3),
les deux appareils radio à courte distance (2) établissant la clé cryptographique commune conformément à un protocole d'accord de clé par échange de messages d'accord de clé prédéterminés via un canal radio de l'interface radio (3),
**caractérisé en ce que**
l'appareil radio à courte distance surveillant (2) surveille ensuite plusieurs autres canaux radio de l'interface radio (3) pour constater si des messages d'accord de clé sont envoyés par le troisième appareil radio à courte distance (9) à l'un des deux appareils radio à courte distance (2-1, 2-2) via l'interface radio (3).
